(19)

Europäisches
Patentamt
European
Patent Office
Office européen
des brevets

(11) **EP 4 474 356 A1**

(12) **EUROPEAN PATENT APPLICATION**

(43) Date of publication:
**11.12.2024 Bulletin 2024/50**

(21) Application number: **24175947.1**

(22) Date of filing: **15.05.2024**

(51) International Patent Classification (IPC):
*C01G 53/00* (2006.01)          *H01M 4/04* (2006.01)
*H01M 4/36* (2006.01)          *H01M 4/38* (2006.01)
*H01M 4/587* (2010.01)

(52) Cooperative Patent Classification (CPC):
**H01M 4/366; C01B 32/20; C01B 33/00;
C01G 53/50; H01M 4/0471; H01M 4/386;
H01M 4/587; H01M 10/0525;** C01P 2002/72;
C01P 2002/74; C01P 2004/03; C01P 2004/45;
C01P 2004/61; C01P 2004/62; C01P 2004/64;

(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2023   KR 20230062573
29.08.2023   KR 20230113832
16.10.2023   KR 20230138050
20.11.2023   KR 20230160195**

(71) Applicant: **Lemon Energy Inc.
Incheon 22825 (KR)**

(72) Inventors:
• **Lee, Si Hyun
22825 Incheon (KR)**
• **Lee, Jin Suk
22825 Incheon (KR)**
• **Ahn, Yu Jeong
22825 Incheon (KR)**

(74) Representative: **Grünecker Patent- und
Rechtsanwälte
PartG mbB
Leopoldstraße 4
80802 München (DE)**

(54) **CATHODE MATERIAL, MANUFACTURING METHOD THEREOF, AND SECONDARY BATTERY INCLUDING THE SAME**

(57)    The present disclosure relates to a cathode material, a manufacturing method thereof, and a secondary battery including the same. In one embodiment, the cathode material includes a lithium metal oxide, and a coating layer formed on the surface of the lithium metal oxide and having a gas barrier property.

**FIG. 1**

**(Cont. next page)**

(52) Cooperative Patent Classification (CPC): (Cont.)
C01P 2004/80; C01P 2006/12; C01P 2006/40;
H01M 2004/021

## Description

## CROSS-REFERENCE TO RELATED APPLICATION

This application claims the benefit of Korean Patent Application No. 10-2023-0062573, filed on May 15, 2023, No. 10-2023-0113832, filed on August 29, 2023, No. 10-2023-0138050 filed on October 16, 2023, and No. 10-2023-0160195 filed on November 20, 2023 in the Korean Intellectual Property Office, the entire disclosures of which are incorporated herein by reference.

## Field of the Invention

The present disclosure relates to a cathode material, a manufacturing method thereof, and a secondary battery including the same.

## Description of Related Art

With the recent industrial development, there is an increasing demand for secondary batteries having high capacity, low weight, and high efficiency. Secondary batteries include lead-acid batteries, nickel-cadmium batteries, lithium-ion batteries, and the like. Among them, lithium secondary batteries produce electric energy by intercalation and deintercalation reactions of lithium ions ($Li^+$) during charging and discharging, and have the advantages of being lightweight and having high energy density. Thus, lithium secondary batteries are used in various fields such as electric vehicles, laptop computers, mobile devices, vertical takeoff and landing aircrafts, and electricity storage systems.

A conventional lithium secondary battery has a structure in which a lithium electrolyte is impregnated in an electrode assembly including a cathode containing a lithium metal oxide as an electrode active material (cathode material), an anode containing a carbon-based active material (anode material), and a porous separator. Here, the cathode may be manufactured by coating an aluminum foil with a cathode material containing a lithium transition metal oxide, and the anode may be manufactured by coating a copper foil with an anode material containing a carbon-based active material.

The cathode material is a supply source of lithium ions, releases lithium ions as an oxidation reaction occurs during charging, and absorbs lithium ions as a reduction reaction occurs during discharging. In contrast to the cathode material, the anode material absorbs lithium ions and electrons during charging, and releases lithium ions and electrons during discharging.

Meanwhile, a lithium metal oxide (lithium transition metal oxide) such as $LiCoO_2$, which is used as a cathode material of a secondary battery, generates combustible gases such as oxygen ($O_2$) due to the increase in internal temperature and the occurrence of various side reactions in high temperature- or high voltage-operating environments. This oxygen is dispersed not only in the cathode, but also in the electrolyte and inside the secondary battery, thereby leading to a drop in operating efficiency of the secondary battery. In addition, when oxygen is generated from the cathode, a combustion reaction may easily occur in high-temperature environments, and thus a fire and an explosion may occur in the secondary battery. Particularly, when a large number of secondary batteries are densely packed, the fire may spread and cause serious damage. Accordingly, research has been conducted to prevent fires and output reductions due to the generation of combustible gas from a cathode material of a secondary battery in high-temperature environments.

Background art related to the present disclosure is disclosed in Republic of Korea Patent Registration No. 10-1872309 B1 (published on June 28, 2018).

## Summary of the Invention

An object of the present disclosure is to manufacture a cathode material capable of preventing the generation of combustible gases, such as oxygen, from a cathode material in high-temperature environments, and exhibiting excellent fire prevention effects.

Another object of the present disclosure is to provide a cathode material exhibiting excellent durability and structural stability, minimized contact resistance, and excellent electrical conductivity and high rate discharge characteristics.

Still another object of the present disclosure is to provide a cathode material exhibiting an excellent effect of reducing crack generation and particle breakage during cathode rolling for improving electrode density.

Yet another object of the present disclosure is to provide a cathode material having high capacity, high output, and long lifespan characteristics and exhibiting excellent reversibility and initial efficiency.

Yet another object of the present disclosure is to provide a cathode material exhibiting excellent productivity and economic feasibility.

Yet another object of the present disclosure is to provide a method of manufacturing the cathode material.

Yet another object of the present disclosure is to provide a cathode slurry including the cathode material.

Yet another object of the present disclosure is to provide a secondary battery including the cathode material.

One aspect of the present disclosure relates to a cathode material.

1. The cathode material includes a lithium metal oxide, and a coating layer formed on the surface of the lithium metal oxide and having a gas barrier property.

2. In embodiment 1, the lithium metal oxide may include lithium (Li) and one or more of nickel (Ni), manganese (Mn), cobalt (Co), aluminum (Al), chromium (Cr), vanadium (V), and iron (Fe).

3. In embodiments 1 to 2, the coating layer may be amorphous, and may have an electrical conductivity of 40 $\mu\Omega\cdot$m or less and a pencil hardness of 4H or more as measured according to ISO 15184.

4. In embodiment 1 to 3, the coating layer may have an oxygen gas transmission rate of $4.0 \times 10^{-1}$ Darcy or less.

5. In embodiment 4, the coating layer may have an oxygen gas transmission rate of $4.0 \times 10^{-5}$ Darcy or less.

6. In embodiments 1 to 5, a particle of the lithium metal oxide may have an average particle diameter of 10 nm to 20 $\mu$m, the coating layer may have a thickness of 20 nm to 2000 nm, and the cathode material may have an average particle diameter of 30 nm to 20 $\mu$m.

7. In embodiments 1 to 6, the cathode material may include 70 to 90 wt% of a lithium metal oxide and 10 to 30 wt% of the coating layer.

8. In embodiments 1 to 7, the coating layer may have a full width at half maximum (FWHM) of an X-ray diffraction angle (2θ) of a (002) plane that ranges from 3° to 6° using CuKα rays.

9. In embodiments 1 to 8, the coating layer may an X-ray diffraction peak using CuKα rays, which satisfies Equation 1 below:

$$[\text{Equation 1}]$$

$$2 \leq I(002)/I(100) \leq 5$$

(wherein, in Equation 1, I(002) is a maximum peak intensity at a (002) plane of the coating layer, and I(100) is a maximum peak intensity at a (100) plane of the coating layer).

Another aspect of the present disclosure relates to a method of manufacturing the cathode material.

10. The method includes calcining a mixture containing a lithium metal oxide and a first coating material, wherein the cathode material includes the lithium metal oxide, and a coating layer formed on a surface of the lithium metal oxide and having a gas barrier property.

11. In embodiment 10, the calcining may be performed at a temperature of 500 °C to 1100 °C.

12. In embodiments 10 to 11, the lithium metal oxide may include lithium (Li) and one or more of nickel (Ni), manganese (Mn), cobalt (Co), aluminum (Al), chromium (Cr), vanadium (V), and iron (Fe).

13. In embodiments 10 to 12, the first coating material may have an average particle diameter of 5 nm to 1000 nm.

14. In embodiments 10 to 13, the mixture may include 70 to 90 wt% of the lithium metal oxide and 10 to 30 wt% of the first coating material.

Still another aspect of the present disclosure relates to a secondary battery including the cathode material.

15. The secondary battery includes a cathode, an anode, and an electrolyte formed between the cathode and the anode, wherein the cathode includes the cathode material.

A cathode material and a secondary battery including the same according to the present disclosure can minimize contact resistance, exhibit excellent electrical conductivity, prevent combustible gases such as oxygen from being generated from the cathode material and diffused into an electrolyte, exhibit an excellent effect in preventing fires, exhibit excellent durability and structural stability, exhibit excellent electrical conductivity and high rate discharge characteristics, exhibit an excellent effect of reducing crack generation and particle breakage during cathode (cathode material) rolling for improving electrode density, have high capacity, high output, and long lifespan characteristics, excellent reversibility and initial efficiency, and exhibit excellent productivity and economic feasibility.

The present disclosure can have the advantages of improved stability and improved performance of a battery by forming a coating layer with extremely low gas permeability on a surface of a lithium metal oxide such as high nickel-lithium to suppress oxygen from being generated and diffused into an electrolyte.

**Brief Description of the Drawings**

FIG. 1 illustrates a cathode material according to one embodiment of the present disclosure.
FIG. 2 illustrates a cathode material according to another embodiment of the present disclosure.
FIG. 3 is a scanning electron microscope (SEM) photograph of a coating layer of a cathode material of Example 1.
FIG. 4 illustrates the results of X-ray diffraction (XRD) analysis of the coating layer of Examples 1 and 2.
FIG. 5 is a graph of output change according to a state of charge (SOC) of Example 1 and Comparative Examples 1 to 3.

**Detailed Description of the Invention**

In describing the present disclosure, when it is determined that detailed descriptions of related well-known technology unnecessarily obscure the gist of the present disclosure, the detailed descriptions will be omitted.

In addition, terms described below are defined by considering functions in the present disclosure and meanings may vary depending on a user or operator's intentions or customs, and thus, the meanings of the terms should be interpreted based on the content throughout the present specification.

**Cathode material**

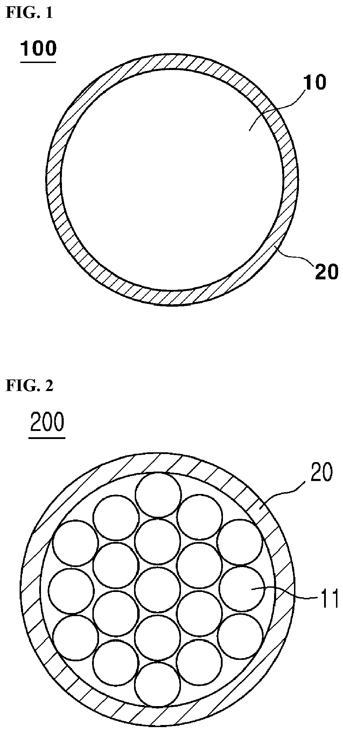

One aspect of the present disclosure relates to a cathode material. FIG. 1 illustrates a cathode material according to one embodiment of the present disclosure. Referring to FIG. 1, a cathode material 100 includes a lithium metal oxide 10 and a coating layer 20 formed on a surface of the lithium metal oxide 10 and having a gas barrier property.

(1) Lithium metal oxide: as the lithium metal oxide, a conventionally used lithium metal oxide may be used without limitation. In one embodiment, the lithium metal oxide may include lithium (Li) and one or more of nickel (Ni), manganese (Mn), cobalt (Co), aluminum (Al), chromium (Cr), vanadium (V), and iron (Fe).

For example, the lithium metal oxide may include one or more of lithium nickel aluminum cobalt oxide ($Li[Ni_x Al_y Co_z]O_2$ (where $0.1 \leq x \leq 1$, $0.1 \leq y \leq 1$, and $0.1 \leq z \leq 1$), NCA), lithium nickel cobalt oxide ($LiNi_{(1-a)}Co_aO_2$), lithium nickel oxide ($LiNiO_2$), lithium nickel cobalt manganese oxide ($Li[Ni_xCo_yMn_z]O_2$ (where $0.1 \leq x \leq 1$, $0.1 \leq y \leq 1$, $0.1 \leq z \leq 1$, and $x+y+z=1$), NCM), lithium cobalt oxide ($LiCoO_2$, LCO), a lithium iron phosphate compound ($LiFePO_4$, LFP), lithium manganese oxide ($LiMn_2O_4$, LMO), lithium cobalt manganese oxide ($LiCo_{(1-a)}Mn_aO_2$ (where $0 \leq a < 1$)), lithium manganese nickel oxide ($LiMn_{(2-z)}Co_zO_4$ (where $0 < z < 2$), lithium manganese cobalt oxide ($LiMn_{(2-z)}Co_zO_4$ (wherein $0 < z < 2$), lithium nickel manganese oxide ($LiNi_{(1-a)}Mn_aO_2$ (where $0 \leq a < 1$), and lithium nickel cobalt manganese oxide ($Li(Ni_aCo_bMn_c)O_4$ (where $0 < a < 2$, $0 < b < 2$, $0 < c < 2$, and $a+b+c=2$).

Referring to FIG. 1, a particle of the lithium metal oxide 10 may be a single crystal. The single crystal refers to a lithium metal oxide particle having one crystal. The single crystal may not include a grain or a grain boundary inside the lithium metal oxide particle.

FIG. 2 illustrates a cathode material according to another embodiment of the present disclosure. Referring to FIG. 2, a lithium metal oxide 11 may have a polycrystal form. The polycrystal may include a plurality of crystals in the lithium metal oxide particle. The polycrystal may include a grain or a grain boundary inside the lithium metal oxide particle.

The lithium metal oxide may be distinguished as a single crystal or a polycrystal by a conventional analysis method. For example, the polycrystal or single crystal may be distinguished through a grain orientation distribution of the lithium metal oxide particle measured by electron backscattered diffraction (EBSD).

In one embodiment, the lithium metal oxide may have an average particle diameter of 10 nm to 20 $\mu$m. Under the above average particle diameter condition, the cathode material can exhibit excellent moldability, energy density, lightweightness, and output characteristics. For example, the lithium metal oxide may have an average particle diameter of 10 nm to 15 $\mu$m, 10 nm to 10 $\mu$m, 30 nm to 10 $\mu$m, 50 nm to 5 $\mu$m, 100 nm to 5 $\mu$m, 0.5 $\mu$m to 3 $\mu$m, or 1 $\mu$m to 3 $\mu$m.

In one embodiment, the lithium metal oxide may be included in an amount of 70 to 90 wt% based on the total weight of the cathode material. Within the above-described range, the cathode material can exhibit excellent moldability, energy density, lightweightness, and output characteristics. For example, the lithium metal oxide may be included in an amount of 75 to 90 wt%, 75 to 85 wt%, or 75 to 80 wt%.

(2) Coating layer: The coating layer is gas impermeable, and can prevent the permeation of combustible gases such as oxygen generated from the lithium metal oxide during operation of the secondary battery in high-temperature environments. The term "gas impermeable" may mean that combustible gases, such as oxygen, generated from the lithium metal oxide are prevented from being released to the outside. When the coating layer is formed, gas impermeability is excellent, so that lithium ions in the cathode material can be easily released and absorbed while suppressing the emission of combustible gases.

In general, a lithium metal oxide is used in the form of secondary particles in which primary particles are aggregated. However, in this case, particle strength is low and lithium by-product content is high, and thus the secondary battery produces a significant amount of combustible gas during operation, resulting in reduced stability. Accordingly, the conventional lithium metal oxide lacks stability and thus has been limited in application to especially high-voltage batteries.

An oxygen generation mechanism in the lithium metal oxide which occurs during charging and discharging under high-temperature conditions may be analyzed by analyzing changes in the internal atomic arrangement structure of the lithium metal oxide and the oxygen generation phenomenon in real time while raising the temperature of the secondary battery. Neutron diffraction analysis may be used as the real-time analysis method, and gas mass spectrometry may be used to accurately analyze the amount of oxygen generated.

In the meantime, a single crystal-lithium metal oxide (SC-NCM) and a polycrystal-lithium metal oxide (PC-NCM) as the lithium metal oxide (or lithium nickel cobalt manganese oxide, NCM) have a layered form in which a transition metal (TM) layer and a lithium (Li) layer are stacked on one another. When the temperature of the lithium metal oxide (SC-NCM and PC-NCM) further increases, the atomic arrangement shape and position of the lithium metal oxide sequentially change (or undergoes a phase transition) into a layered structure, a spinel structure, and a rock-salt structure, and at this time, a large amount of oxygen ($O_2$) is generated.

The oxygen generated from the cathode material of the secondary battery is a main cause of battery ignition and explosion, and when the oxygen meets or reacts with an organic electrolyte of the secondary battery, a combustion reaction may occur in combination with the high-temperature operating environment (see Sung-Kyun Jung et al., Adv. Funct. Mater. 2022, 32, 2108790).

In addition, it is necessary to increase the rolling density in order to increase the capacity per unit volume of an electrode, and conventionally developed lithium composite transition metal oxides have a problem of increased resistance and gas generation due to severe particle breakage during rolling.

On the other hand, when the coating layer of the present disclosure is formed, the occurrence of cracks and particle breakage of the cathode active material due to rolling can be prevented.

According to the present disclosure, by reducing the crack generation and particle breakage of the lithium metal oxide, electrode and interfacial resistance can be reduced, adhesion can be improved, cell resistance can be reduced, lifespan characteristics can be improved, and gas generation can be reduced.

By including the coating layer, the cathode material has excellent strength and durability and exhibits excellent gas impermeability (or gas barrier property) to suppress the emission of combustible gases such as oxygen, and thus exhibits an excellent fire prevention effect in high-temperature environments, so that the low electrical conductivity of the cathode material, which is a metal oxide, can be significantly improved, thereby exhibiting excellent electrical conductivity and capacity characteristics.

In one embodiment, the coating layer may have an oxygen gas transmission rate (OTR) of $4.0 \times 10^{-1}$ Darcy or less. The coating layer may exhibit excellent gas impermeability under the above conditions, which can suppress combustible gas emission and achieve excellent fire protection effects in high-temperature environments. For example, the coating layer may have an OTR of $4.0 \times 10^{-2}$ Darcy or less, $4.0 \times 10^{-8}$ Darcy to $4.0 \times 10^{-2}$ Darcy, $4.0 \times 10^{-7}$ Darcy to $4.0 \times 10^{-2}$ Darcy or $4.0 \times 10^{-6}$ Darcy to $4.0 \times 10^{-2}$ Darcy.

In one embodiment, the OTR may be measured by a method known in the art according to ASTM D3985 or JIS K7126. For example, the OTR of the cathode material may be measured by expressing the accumulated amount (volume) of oxygen gas that has passed through the coating layer by differential pressure as a function of time, which is used to measure a permeability coefficient and transmission rate of oxygen.

The OTR of the cathode material can be measured using a measurement device (MD) (OX-TRAN Model 2/21, OX-TRAN Model 2/62, or the like manufactured by MOCON).

For example, the coating layer may include a carbon-based material. By including the carbon-based material, excellent gas barrier properties, electrical conductivity, and capacity characteristics can be achieved.

In one embodiment, the coating layer may be amorphous. Durability and strength can be excellent under the above conditions.

In one embodiment, the coating layer may have an electrical conductivity (resistivity) of 40 $\mu\Omega \cdot m$ or less. Electrical conductivity can be excellent under the above conditions. For example, electrical conductivity may range from 0.1 to 40 $\mu\Omega \cdot m$, from 0.5 to 40 $\mu\Omega \cdot m$, from 1 to 40 $\mu\Omega \cdot m$, from 1 to 30 $\mu\Omega \cdot m$, from 1 to 25 $\mu\Omega \cdot m$, from 1 to 15 $\mu\Omega \cdot m$, or 1 to 10 $\mu\Omega \cdot m$.

In one embodiment, the coating layer may have a density of 0.3 $g/cm^2$ or more. Excellent lightweightness and electrical conductivity can be achieved under the above conditions. For example, the coating layer may have a density of 0.3 to 2.5 $g/cm^2$, 0.5 to 2.5 $g/cm^2$, 0.8 to 2.5 $g/cm^2$, 0.8 to 2.0 $g/cm^2$, or 1.0 to 1.5 $g/cm^2$.

In one embodiment, the coating layer may have a specific surface area (BET) of 100 $m^2/g$ or less. Excellent structural stability can be achieved under the above conditions. For example, the coating layer may have a specific surface area (BET) of greater than 0 and less than or equal to 100 $m^2/g$, 1 to 100 $m^2/g$, 5 to 100 $m^2/g$, 10 to 100 $m^2/g$, 20 to 80 $m^2/g$, 30 to 80 $m^2/g$, or 30 to 60 $m^2/g$.

In one embodiment, the coating layer may have a pencil hardness of 4H or more as measured according to ISO 15184. Under the above conditions, while having excellent durability and strength, the coating layer can be easily prevented from cracking or being destroyed when combustible gas is generated from the lithium metal oxide. For example, the coating layer may have a pencil hardness of 4H to 9H, 4H to 8H, 4H to 7H, or 4H to 6H. For example, the coating layer may have a pencil hardness of 4H, 4.5H, 5H, 5.5H, 6H, 6.5H, 7H, 7.5H, 8H, 8.5H or 9H.

In one embodiment, the coating layer may have a thickness of 20 nm to 2000 nm. Under the above conditions, the coating layer can exhibit excellent lightweightness and durability, an excellent fire prevention effect in high-temperature environments by suppressing the emission of combustible gases such as oxygen, and excellent electrical conductivity and capacity characteristics. For example, the coating layer may have a thickness of 20 to 1800 nm, 50 to 1500 nm, 50 to 1000 nm, 50 to 800 nm, 50 to 500 nm, 50 to 400 nm, 50 to 300 nm, 100 to 300 nm, 100 to 250 nm, or 100 to 200 nm.

In one embodiment, the cathode material may have an average particle diameter of 30 nm to 20 $\mu$m. Under the above conditions, the cathode material can exhibit excellent formability, energy density, lightweightness, and output characteristics. For example, the cathode material may have an average particle diameter of 30 nm to 18 $\mu$m, 30 nm to 15 $\mu$m, 40 nm to 15 $\mu$m, 40 nm to 10 $\mu$m, 50 nm to 10 $\mu$m, 60 nm to 5 $\mu$m, 80 nm to 5 $\mu$m, 100 to 5 $\mu$m, 0.5 to 3 $\mu$m, 1 to 3.5 $\mu$m, or 1 to 3 $\mu$m.

In one embodiment, the coating layer may be included in an amount of 10 wt% to 30 wt% based on the total weight of the cathode material. Within the above-described range, the cathode material can exhibit excellent lightweightness, energy density, output characteristics, and a gas barrier property. For example, the coating layer may be included in an amount of 10 to 25 wt%, 15 to 25 wt%, or 15 to 20 wt%.

In one embodiment, the coating layer may have an effective peak in one or more regions of a 2θ value of 22° to 30° and a 2θ value of 40° to 46° in an X-ray diffraction (XRD) spectrum using CuKα rays of 1.54 to 2.0 Å. Under the above conditions, the coating layer can exhibit high hardness, excellent crystallinity, and excellent electrical conductivity, thereby securing high capacity and high output characteristics of the cathode material. For example, the coating layer may have an effective peak in one or more regions of a 2θ value of 22° to 28° and a 2θ value of 42° to 45° in an X-ray diffraction (XRD) spectrum.

For example, the coating layer may have an effective peak in an X-ray diffraction (XRD) spectrum in which 2θ is measured from 10° to 70° with a step size of 0.01° using CuKα rays of 1.54178 Å, with a diffraction angle (2θ) value in a (002) plane of 22° to 28° and a diffraction angle (2θ) value in a (100) plane of 42° to 45°.

In one embodiment, using CuKα rays of 1.54 to 2.0 Å, a full width at half maximum (FWHM) of the X-ray diffraction angle (2θ) of the (002) plane of the coating layer may range from 3° to 6°. In the above FWHM range, the coating layer exhibits high hardness, excellent durability and crystallinity, and excellent electrical conductivity, so that the cathode material can achieve high capacity and high output characteristics. For example, the FWHM may range from 3.5° to 5.8°. For example, the FWHM may range from 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, 5, 5.1, 5.2, 5.3, 5.4, 5.5, 5.6, 5.7, 5.8, 5.9 or 6 °.

For example, the coating layer may have a FWHM of 3° to 6° in an X-ray diffraction (XRD) spectrum measured using CuKα rays of 1.54178 Å at 2θ of 10° to 70° with a step size of 0.01°.

In one embodiment, the coating layer may have an X-ray diffraction peak using CuKα rays of 1.54 to 2.0 Å, which satisfies Equation 1 below:

$$[\text{Equation 1}]$$

$$2 \leq I(002)/I(100) \leq 5$$

(wherein, in Equation 1, I(002) is a maximum peak intensity at a (002) plane of the coating layer, and I(100) is a maximum peak intensity at a (100) plane of the coating layer).

When the X-ray diffraction peak of the coating layer satisfies the condition of Equation 1 above, the coating layer exhibits high hardness, excellent durability and crystallinity, and excellent electrical conductivity, so that high capacity and high output characteristics of the cathode material can be secured. For example, the value of Equation 1 may range from 2.5 to 4.8. For example, the value of Equation 1 may range from 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9 or 5.

For example, the X-ray diffraction peak of the coating layer measured using CuKα rays of 1.54178 Å at 2θ of 10° to 70° with a step size of 0.01°may satisfy Equation 1.

**Cathode material manufacturing method**

Another aspect of the present disclosure relates to a method of manufacturing the cathode material. In one embodiment, the method of manufacturing the cathode material includes calcining a mixture including a lithium metal oxide and a first coating material (S10).

The cathode material includes a lithium metal oxide and a coating layer formed on a surface of the lithium metal oxide and having a gas barrier property. The lithium metal oxide and the coating layer may be the same as described above.

In one embodiment, the mixture may include 70 to 90 wt% of the lithium metal oxide and 10 to 30 wt% of the first coating material. Within the above-described range, the cathode material can exhibit excellent moldability, energy density, lightweightness, and output characteristics. For example, the lithium metal oxide may be included in an amount of 75 to 90 wt%, 75 to 85 wt%, or 75 to 80 wt% based on the total weight of the cathode material. For example, the coating layer may be included in an amount of 10 to 25 wt%, 15 to 25 wt%, or 15 to 20 wt% based on the total weight of the cathode material.

In one embodiment, the calcination may be performed at 500 to 1100 °C. The calcination may facilitate the formation of the coating layer on the surface of the lithium metal oxide. For example, the calcination may be performed at 600 to 1050 °C, 700 to 1050 °C, 800 to 100 °C, 900 to 1000 °C, or 965 to 1000°C.

For example, the calcination may be performed in an inert gas atmosphere. The inert gas may include nitrogen.

For example, a calcined material formed after performing the calcination may be subjected to a general dry grinding process using devices, such as an attachment mill, an air classifier mill (ACM), a jet mill, and a pin mill, and then classified to manufacture a cathode material.

In one embodiment, the first coating material may have an average particle diameter of 5 nm to 1000 nm. Under the above average particle diameter condition, the calcination may facilitate the formation of the coating layer on the surface of the lithium metal oxide. For example, the first coating material may have an average particle diameter of 5 to 800 nm, 5 to 500 nm, 10 to 450 nm, 10 to 400 nm, 10 to 350 nm, 10 to 300 nm, 10 to 200 nm, or 10 to 100 nm.

For example, Lemon Energy product NanoMollisAdamas may be used as the first coating material.

The coating layer may be amorphous. In addition, the coating layer is formed by self-assembly of the first coating material, and exhibits excellent isotropic properties and thermal stability so that a structural change does not occur at a high temperature (about 3000 °C).

The coating layer formed from the first coating material can exhibit high-gas impermeability, and excellent chemical resistance and electrical conductivity. Further, the first coating material may be dust-free and have a purity (impurity content) of 5 ppm or less or 2 ppm or less. Under the above conditions, the cathode material can exhibit excellent strength, electrical properties, and electrical conductivity.

In one embodiment, the lithium metal oxide may include lithium (Li) and one or more of nickel (Ni), manganese (Mn), cobalt (Co), aluminum (Al), chromium (Cr), vanadium (V), and iron (Fe).

For example, the lithium metal oxide may include one or more of lithium nickel aluminum cobalt oxide ($Li[Ni_x Al_y Co_z]O_2$ (where $0.1 \leq x \leq 1$, $0.1 \leq y \leq 1$, and $0.1 \leq z \leq 1$), NCA), lithium nickel cobalt oxide ($LiNi_{(1-a)}Co_aO_2$), lithium nickel oxide ($LiNiO_2$), lithium nickel cobalt manganese oxide ($Li[Ni_x Co_y Mn_z]O_2$ (where $0.1 \leq x \leq 1$, $0.1 \leq y \leq 1$, $0.1 \leq z \leq 1$, and x+y+z =1), NCM), lithium cobalt oxide ($LiCoO_2$, LCO), a lithium iron phosphate compound ($LiFePO_4$, LFP), lithium manganese oxide ($LiMn_2O_4$, LMO), lithium cobalt manganese oxide ($LiCo_{(1-a)}Mn_aO_2$ (where $0 \leq a < 1$)), lithium manganese nickel oxide ($LiMn_{(2-z)}Co_zO_4$ (where $0 < z < 2$), lithium manganese cobalt oxide ($LiMn_{(2-z)}Co_zO_4$ (wherein 0<z<2), lithium nickel manganese oxide ($LiNi_{(1-a)}Mn_aO_2$ (where $0 \leq a < 1$), and lithium nickel cobalt manganese oxide ($Li(Ni_aCo_bMn_c)O_4$ (where $0 < a < 2$, $0 < b < 2$, $0 < c < 2$, and a+b+c=2).

In one embodiment, a particle of the lithium metal oxide may have an average particle diameter of 10 nm to 20 $\mu$m. Under the above average particle diameter condition, the cathode material can exhibit excellent moldability, energy density, lightweightness, and output characteristics. For example, the lithium metal oxide may have an average particle diameter of 10 nm to 15 $\mu$m, 10 nm to 10 $\mu$m, 30 nm to 10 $\mu$m, 50 nm to 5 $\mu$m, 100 nm to 5 $\mu$m, 0.5 $\mu$m to 3 $\mu$m, or 1 $\mu$m to 3 $\mu$m.

**Cathode slurry including cathode material**

Still another aspect of the present disclosure relates to a cathode slurry including the cathode material.

In one embodiment, the cathode slurry may include the cathode material, a binder, and a solvent. For example, the cathode slurry may include 100 parts by weight of the cathode material, 0.1 to 40 parts by weight of the binder, and 10 to 2000 parts by weight of the solvent.

The binder may be included to attach the cathode material to an electrode plate (current collector). Any conventional binder can be used as the binder. In one embodiment, the binder may include polyvinylidene fluoride, polyvinyl alcohol, carboxymethyl cellulose (CMC), starch, hydroxypropylcellulose, polyvinylpyrrolidone, polytetrafluoroethylene, polyethylene, polypropylene, an ethylene-propylene-diene monomer (EPDM), styrene-based rubber, and fluorinated rubber.

In one embodiment, the binder may be included in an amount of 1 to 40 parts by weight based on 100 parts by weight of the cathode material. Within the above-described range, an excellent bonding force with the cathode material can be achieved, and strong adhesion with the electrode plate can be achieved without degrading electrical characteristics. For example, the binder may be included in an amount of 0.1 to 30 parts by weight, 0.5 to 25 parts by weight, 1 to 20 parts by weight, 1 to 10 parts by weight, or 1 to 8 parts by weight.

Any conventional solvent can be used as the solvent. In one embodiment, the solvent may include one or more of water, an ethanol-based solvent, an amide-based solvent, an ester-based solvent, and a hydrocarbon-based solvent. By including the solvent, excellent mixing and enhanced workability can be achieved.

The alcohol-based solvent may include one or more of methanol, ethanol, isopropanol, and butanol. The amide-based solvent may include one or more of N-methyl-2-pyrrolidone (NMP), dimethylacetamide (DMAC), and dimethylformamide (DMF). The hydrocarbon-based solvent may include one or more of toluene and xylene.

In one embodiment, the solvent may be included in an amount of 10 to 2000 parts by weight based on 100 parts by weight of the cathode material. Under the above conditions, excellent mixing and dispersibility of cathode slurry components can be achieved. For example, the solvent may be included in an amount of 10 to 1000 parts by weight, 10 to 500 parts by weight, or 10 to 300 parts by weight.

Meanwhile, a conductive material is added to the cathode material and the anode material in order to improve the electrical conductivity of an active material. In particular, since the lithium metal oxide used as the cathode active material has inherently low electrical conductivity, a conductive material needs to be added to the cathode material. Among conductive materials, chain-like conductive materials are generally used to increase the conductivity of the cathode material, and such chain-like conductive materials have a disadvantage of having difficulty in achieving a high loading density in a compression process for reducing the thickness of the cathode material.

Particularly, in a secondary battery having a high energy density, the amount of the added conductive material and binder is limited to increase the amount of the cathode active material included in the cathode material. With such a limited amount of conductive material, the use of a large amount of graphitized carbon, which is not sufficiently electrically conductive, can lead to deviations in electrical conductivity in the applied cathode material, resulting in non-uniformity in performance between cells. The non-uniformity in battery performance causes an abnormal operation of a battery in a medium-to-large device in which a plurality of batteries are used.

On the other hand, in the cathode material of the present disclosure, by forming the coating layer on the surface of the lithium metal oxide, an effect in which a linear and dot-shaped coating material having excellent conductivity is evenly dispersed in the cathode (cathode slurry) can be achieved, the conductivity of the cathode can be improved, and a secondary battery with improved high-rate discharge capacity characteristics can be provided.

**Secondary battery including cathode material**

Yet another aspect of the present disclosure relates to a secondary battery including the cathode material. In one embodiment, the secondary battery includes a cathode, an anode, and an electrolyte formed between the cathode and the anode, wherein the cathode includes the cathode material. For example, the secondary battery may include a lithium secondary battery.

For example, the secondary battery may further include a separator disposed between the anode and the cathode to prevent electrical short of the anode and the cathode.

In one embodiment, each of the cathode and the anode can be manufactured by applying a mixture including an active material (a cathode material and an anode material) and a binder to one surface of an electrode plate (current collector), followed by drying and pressing. For example, the mixture for manufacturing an anode may further include a conductive material.

In one embodiment, the anode material (anode active material) may include one or more of graphite-based, carbon-based, and metal-based materials.

The graphite-based material may include natural graphite, artificial graphite, and the like.

The carbon-based material may include high-crystalline carbon and low-crystalline carbon. The low-crystalline carbon may include soft carbon and hard carbon, but the present disclosure is not limited thereto. The low-crystalline carbon may be derived from pitch and coke.

The metal-based material may include silicon (Si), silicon oxide ($SiO_x$), and silicon-carbon (SiC) materials.

In one embodiment, the cathode plate and the anode plate may each include one or more of copper, stainless steel, aluminum, nickel, and titanium.

In another example, the anode plate may include nickel foam, copper foam, a polyimide film coated with a conductive metal, or a combination thereof.

In still another example, the anode plate may include copper foil, carbon-coated copper foil, copper foil having a surface roughness of 5 nm or more, nickel foil, stainless steel foil, nickel-coated iron (Fe) foil, and copper foil with a hole with a size of 1 to 50 μm.

For example, the mixture for manufacturing an anode may further include a conductive material. In one embodiment, the conductive material may include one or more of natural graphite, artificial graphite, carbon black, acetylene black, ketjen black, channel black, carbon fiber, metal fiber, fluorinated carbon, aluminum, nickel powder, zinc oxide, potassium titanate, titanium oxide, and a polyphenylene compound.

In one embodiment, the binder may include polyvinylidene fluoride, polyvinyl alcohol, carboxymethyl cellulose (CMC), starch, hydroxypropyl cellulose, polyvinylpyrrolidone, polytetrafluoroethylene, polyethylene, polypropylene, an ethylene-propylene-diene monomer (EPDM), styrene-based rubber, and fluorinated rubber.

In one embodiment, a conventional separator may be used as the separator. For example, the separator may include one or more of polyester, polyethylene, polypropylene, and polytetrafluoroethylene (PTFE). The separator may be in the form of a nonwoven fabric or woven fabric. The separator is porous with an average pore diameter of 0.01 to 10 $\mu$m, and the separator may have a thickness of 5 to 500 $\mu$m.

In one embodiment, the electrolyte may include a non-aqueous organic solvent and a lithium salt. For example, the non-aqueous organic solvent may include one or more of a carbonate-based solvent, an ester-based solvent, an ether-based solvent, and a ketone-based solvent. The carbonate-based solvent may include one or more of dimethyl carbonate (DMC), diethyl carbonate (DEC), dipropyl carbonate (DPC), methyl propyl carbonate (MPC), ethyl methyl carbonate (EMC), ethyl propyl carbonate (EPC), ethylene carbonate (EC), propylene carbonate (PC), and butylene carbonate (BC).

The ester-based solvent may include one or more of butyrolactone, decanolide, valerolactone, caprolactone, n-methyl acetate, n-ethyl acetate, and n-propyl acetate. The ether-based solvent may include dibutyl ether and the like. The ketone-based solvent may include poly(methyl vinyl ketone).

The lithium salt may serve as a source of lithium ions in the battery. For example, the lithium salt may include one or more of $LiPF_6$, $LiBF_4$, $LiSbF_6$, $LiAsF_6$, $LiClO_4$, $LiCF_3SO_3$, $LiN(CF_3SO_2)_2$, $LiN(C_2F_5SO_2)_2$, $LiAlO_h$, and $LiAlCl_4$, but the present disclosure is not limited thereto.

In one embodiment, the electrolyte may further include one or more of vinylene carbonate, vinyl ethylene carbonate, monofluoroethylene carbonate, difluoroethylene carbonate, succinic anhydride, and 1,3-propane sultone.

In one embodiment, the lithium secondary battery may include a prismatic battery, a cylindrical battery, a pouch-type battery, and the like.

Hereinafter, the configuration and operation of the present disclosure will be described in more detail through preferred examples of the present disclosure. However, these examples are presented for illustrative purposes only, and it should be not understood that the present disclosure is limited thereto in any way. The contents not described here can be sufficiently technically inferred by those skilled in the art, and thus a description thereof will be omitted.

**Examples and Comparative Examples**

**Example 1**

(1) Preparation of lithium metal oxide and first coating material: Lithium nickel cobalt manganese oxide ($Li[Ni_{0.8}Co_{0.1}Mn_{0.1}]O_2$, NCM811) in the form of a single crystal with an average particle diameter of 100 to 200 nm, containing nickel (Ni), cobalt (Co), and manganese (Mn) in a molar ratio of 8:1:1, was used. As the first coating material, a carbon-based material (Lemon Energy product NanoMollisAdamas) with an average particle diameter of 10 nm and a pencil hardness of 6H according to ISO 15184 was used.

(2) Preparation of cathode material: A mixture containing 95 wt% of the lithium metal oxide and 5 wt% of the first coating material was calcined at 900 to 1050 °C in an inert gas (nitrogen) atmosphere, and crushed and classified by a known method to prepare a cathode material.

The cathode material included 95 wt% of the lithium metal oxide and 5 wt% of a coating layer, wherein the coating layer was amorphous, had a thickness of 50 nm, had a pencil hardness of 6H to 6.5H according to ISO 15184, and had an electrical conductivity of 6 $\mu\Omega\cdot$m and a density of 2.0 g/cm$^3$

**Example 2**

A cathode material was prepared in the same manner as in Example 1 except that a mixture containing 90 wt% of the lithium metal oxide of Example 1 and 10 wt% of a first coating material was prepared, and a carbon-based material (Lemon Energy product NanoMollisAdamas) with an average particle diameter of 10 nm and a pencil hardness of 4H according to ISO 15184 was used as the first coating material.

The cathode material included 90 wt% of the lithium metal oxide and 10 wt% of a coating layer, wherein the coating layer was amorphous, had a thickness of 100 nm, had a pencil hardness of 4H according to ISO 15184, and had an electrical conductivity of 9 $\mu\Omega\cdot$m and a density of 2.0 g/cm$^3$.

**Example 3**

A cathode material was prepared in the same manner as in Example 1, except that a mixture containing 85 wt% of the lithium metal oxide of Example 1 and 15 wt% of a first coating material was prepared, and a carbon-based material (Lemon Energy product NanoMollisAdamas) with an average particle diameter of 20 nm and a pencil hardness of 6H to 7H according to ISO 15184 was used as the first coating material.

The cathode material included 85 wt% of the lithium metal oxide and 15 wt% of a coating layer, wherein the coating layer was amorphous, had a thickness of 200 nm, had a pencil hardness of 6H to 7H according to ISO 15184, and had an electrical conductivity of 5 $\mu\Omega\cdot$m and a density of 2.0 g/cm$^3$.

**Example 4**

A cathode material was prepared in the same manner as in Example 1 except that a mixture containing 80 wt% of the lithium metal oxide of Example 1 and 20 wt% of a first coating material was prepared, and a carbon-based material (Lemon Energy product NanoMollisAdamas) with an average particle diameter of 10 nm and a pencil hardness of 8H to 8.5H according to ISO 15184 was used as the first coating material.

The cathode material included 80 wt% of the lithium metal oxide and 20 wt% of a coating layer, wherein the coating layer was amorphous, had a thickness of 300 nm, had a pencil hardness of 8H to 8.5H according to ISO 15184, and had an electrical conductivity of 4 $\mu\Omega\cdot$m and a density of 2.0 g/cm$^3$.

**Example 5**

A cathode material was prepared in the same manner as in Example 1, except that a mixture containing 70 wt% of the lithium metal oxide of Example 1 and 30 wt% of a first coating material were prepared, and a coating layer was formed with a thickness of 500 nm.

The cathode material included 70 wt% of the lithium metal oxide and 30 wt% of the coating layer, wherein the coating layer had a thickness of 500 nm, had a pencil hardness of 4H to 6H according to ISO 15184, and had an electrical conductivity of 10 $\mu\Omega\cdot$m and a density of 1.8 g/cm$^3$.

**Examples 1 to 5 and Comparative Examples 1 to 3: Manufacture of cathode for secondary battery**

**Examples 1 to 5**

A cathode slurry containing 100 parts by weight of each of the cathode materials of Examples 1 to 5, 5.3 parts by weight of a binder (polyvinylidene fluoride (PVDF)) and 10 to 200 parts by weight of a solvent (N-methyl-2-pyrrolidone (NMP)) was prepared. Thereafter, the cathode slurry was rolled and dried by a method known in the art to manufacture a cathode for a secondary battery.

**Comparative Example 1**

A cathode slurry containing 100 parts by weight of the lithium metal oxide (NCM811) of Example 1, 5.6 parts by weight of Denka black, 5.6 parts by weight of a binder (polyvinylidene fluoride (PVDF)), and 10 to 200 parts by weight of a solvent (N-methyl-2-pyrrolidone (NMP)) was prepared. Thereafter, the cathode slurry was rolled and dried by a method known in the art to manufacture a cathode for a secondary battery.

**Comparative Example 2**

A cathode slurry containing 100 parts by weight of the lithium metal oxide (NCM811) of Example 1, 5.7 parts by weight of Denka black, 2.3 parts by weight of carbon nanotubes, 5.7 parts by weight of a binder (polyvinylidene fluoride (PVDF)), and 10 to 200 parts by weight of a solvent (N-methyl-2-pyrrolidone (NMP)) was prepared. Thereafter, the cathode slurry was rolled and dried by a method known in the art to manufacture a cathode for a secondary battery.

**Comparative Example 3**

A cathode slurry containing 100 parts by weight of the lithium metal oxide (NCM811) of Example 1, 5.8 parts by weight of Denka black, 4.7 parts by weight of carbon nanotubes, 5.8 parts by weight of a binder (polyvinylidene fluoride (PVDF)), and 10 to 200 parts by weight of a solvent (N-methyl-2-pyrrolidone (NMP)) was prepared. Thereafter, the cathode slurry was rolled and dried by a method known in the art to manufacture a cathode for a secondary battery.

**Experimental Example**

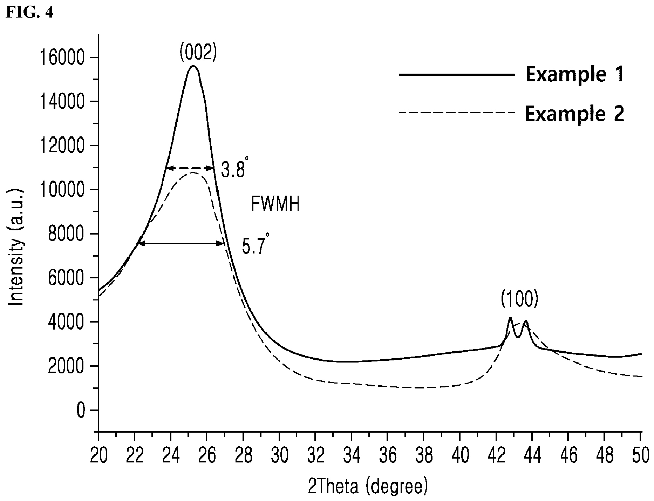

(1) Analysis of coating layer of cathode material: The coating layer of the cathode material of Example 1, which is representative of Examples 1 to 5, was observed under a scanning electron microscope.

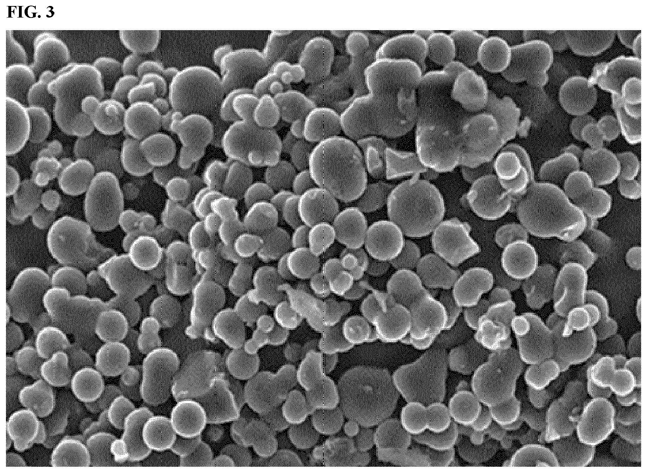

FIG. 3 is a scanning electron microscope (SEM) photograph of the coating layer of the cathode material of Example 1. Referring to FIG. 3, it was found that the coating layer of Example 1 was amorphous, was formed by self-assembly of the first coating material, and exhibited excellent isotropic properties.
(2) XRD peak analysis of cathode material: The coating layers of the cathode materials of Examples 1 and 2, which are representative of Examples 1 to 5, were subjected to X-ray diffraction (XRD) analysis, and the results are shown in FIG. 4. The X-ray diffraction analysis was performed by measuring $2\theta=10$ to $70°$ with a step size of $0.01°$ under the conditions of, CuK$\alpha$ rays with a wavelength of 1.54178 Å using an Empyrean XRD diffractometer from Malvern Panalytical.

FIG. 4 illustrates XRD analysis results of the coating layers of Examples 1 and 2. Referring to FIG. 4 above, it was found that, at the first peak intensity of the XRD graph, the coating layers of Examples 1 and 2 had a first peak formed near $2\theta=25°$, which is a value close to graphite in the (002) plane, indicating that the coating layers are highly crystalline. In FIG. 4 at the second peak intensity, the second peak appeared around $2\theta=43°$ in the (100) crystal plane, indicating that the coating layers are highly crystalline. In addition, it was found that the coating layer of Example 1 exhibited high hardness, hard film formation, and excellent electrical conductivity.

Furthermore, it was found that the coating layer of Example 1 had a full width at half maximum (FWHM) of the X-ray diffraction angle ($2\theta$) of the (002) plane near $3.8°$ and the coating layer of Example 2 had an FWHM near $5.7°$, the coating layer of Example 1 had a value of 4.2 to 4.4 in Equation 1 for the X-ray diffraction peaks, and the coating layer of Example 2 had a value of 2.6 to 2.8 in Equation 1.

[Equation 1]

$$I(002)/I(100)$$

(in Equation 1, I(002) is a maximum peak intensity (a.u.) in the (002) plane of the coating layer, and I(100) is a maximum peak intensity (a.u.) in the (100) plane of the coating layer).

(3) Measurement of oxygen gas transmission rate of cathode material: The oxygen gas transmission rate (OTR) of the coating layer of the cathode material used in each of Examples 1 to 5 and Comparative Example 1 was measured. The OTR was measured according to ASTM D3985 using a Mocon OX-TRAN 2/22 measuring device.

Specifically, circular samples (50 mm diameter and 1 mm or less thickness) in which a coating layer with a thickness shown in Table 1 was formed on a surface of a substrate (graphite with a porosity of 5 to 10%) were prepared by applying the first coating material and the calcination method used in each of Examples 1 to 5, and the OTR measurement results are shown in Table 1 below. In Table 1, Control Example shows the OTR measurement result of a substrate on which the coating layer is not formed.

[Table 1]

| Classification | Coating layer thickness (nm) | OTR (Darcy) |
|---|---|---|
| Example 1 | 50 | 0.4 |
| Example 2 | 100 | 0.09 |
| Example 3 | 200 | 0.008 |
| Example 4 | 300 | 0.0008 |
| Example 5 | 500 | 0.0003 |
| Control Example | 0 | 3 |

Referring to the results of Table 1, it was found that the coating layer of each of Examples 1 to 5 had an OTR of 0.4 Darcy or less and exhibited excellent oxygen barrier properties to suppress the permeation of oxygen generated from the lithium metal oxide, thereby exhibiting an excellent effect of preventing the risk of fire during operation of the secondary battery at high temperatures.

(4) Manufacture of secondary battery and evaluation of output change: A pouch-type full cell was manufactured using the anode active material of Examples and Comparative Examples described above. Specifically, the cathode of each of Examples 1 to 5 and Comparative Examples 1 to 3, and an anode manufactured by coating, drying, and rolling one surface of a current collector for an anode with an anode slurry containing natural graphite and having a capacity of approximately 370 mAh/g were disposed. Thereafter, a pouch cell with a capacity of 1.0 Ah was manufactured by a conventional method using an electrolyte and a separator (containing polypropylene and polyethylene).

The electrolyte was prepared by dissolving 1 M of $LiPF_6$ in a mixed solvent of ethyl methyl carbonate (EMC) and ethylene carbonate (EC) (with EMC and EC at a volume ratio of 5:5), and then adding vinylene carbonate (VC) and fluoroethylene carbonate (FEC) (containing 96.5 wt% of the mixed solvent, 0.5 wt% of the vinylene carbonate, and 3 wt% of fluoroethylene carbonate).

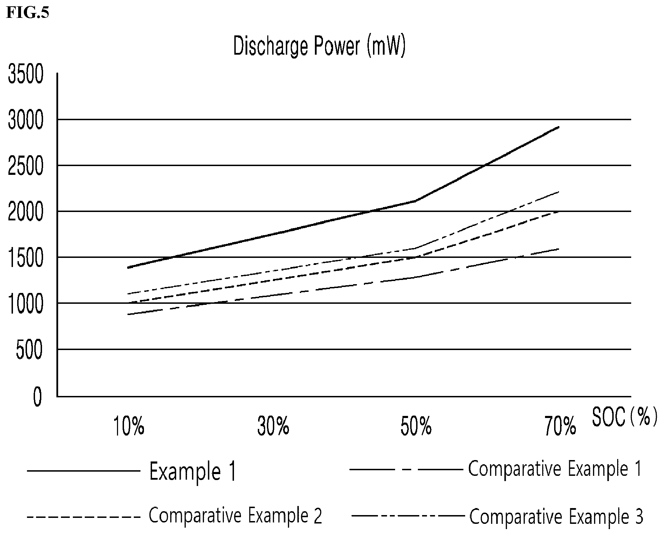

For Example 1 and Comparative Examples 1 to 3, which are representative of Examples and Comparative Examples, output changes according to a state of charge (SOC) were evaluated. Specifically, the secondary batteries of Example 1 and Comparative Examples 1 to 3 were subjected to formation at 4.2 V, and then charged and discharged between 4.2 V and 2.5 V (C-rate=1 C condition) while measuring changes in output (discharge power, mW) according to a state of charge (SOC), and the results are shown in FIG. 5.

FIG. 5 is a graph of output changes according to a state of charge (SOC) of Example 1 and Comparative Examples 1 to 3. Referring to the results of FIG. 5, it was found that Example 1 shows higher levels of output at all sections of the state of charge (SOC) compared to Comparative Examples 1 to 3.

The present disclosure has been described with reference to embodiments of the present disclosure. Those skilled in the art to which the present disclosure pertains will understand that various modifications may be made within the range that do not depart from the scope of the present disclosure. Therefore, the disclosed embodiments should be considered in a descriptive sense only and not for purposes of limitation. The scope of the present disclosure is defined not by the above description but by the following claims, and all differences within equivalent ranges of the scope of the present disclosure should be considered as being included in the scope of the present disclosure.

**Claims**

1. A cathode material comprising:

   a lithium metal oxide; and
   a coating layer formed on a surface of the lithium metal oxide and having a gas barrier property.

2. The cathode material of claim 1, wherein the lithium metal oxide includes lithium (Li) and one or more of nickel (Ni), manganese (Mn), cobalt (Co), aluminum (Al), chromium (Cr), vanadium (V), and iron (Fe).

3. The cathode material of claim 1, wherein the coating layer is amorphous, and has an electrical conductivity of 40 $\mu\Omega \cdot m$ or less and a pencil hardness of 4H or more as measured according to ISO 15184.

4. The cathode material of claim 1, wherein the coating layer has an oxygen gas transmission rate of $4.0 \times 10^{-1}$ Darcy or less.

5. The cathode material of claim 4, wherein the coating layer has an oxygen gas transmission rate of $4.0 \times 10^{-5}$ Darcy or less.

6. The cathode material of claim 1, wherein,

   the lithium metal oxide has an average particle diameter of 10 nm to 20 $\mu m$,
   the coating layer has a thickness of 20 nm to 2000 nm, and
   the cathode material has an average particle diameter of 30 nm to 20 $\mu m$.

7. The cathode material of claim 1, wherein the cathode material includes 70 to 90 wt% of a lithium metal oxide and 10 to 30 wt% of the coating layer.

8. The cathode material of claim 1, wherein the coating layer has a full width at half maximum (FWHM) of an X-ray diffraction angle ($2\theta$) of a (002) plane that ranges from 3° to 6° using $CuK\alpha$ rays.

9. The cathode material of claim 1, wherein the coating layer has an X-ray diffraction peak using CuKα rays, which satisfies Equation 1 below:

$$[\text{Equation 1}]$$

$$2 \leq I(002)/I(100) \leq 5$$

(wherein, in Equation 1, I(002) is a maximum peak intensity at a (002) plane of the coating layer, and I(100) is a maximum peak intensity at a (100) plane of the coating layer).

10. A method of manufacturing a cathode material, the method comprising calcining a mixture containing a lithium metal oxide and a first coating material,
wherein the cathode material includes the lithium metal oxide, and a coating layer formed on a surface of the lithium metal oxide and having a gas barrier property.

11. The method of claim 10, wherein the calcining is performed at a temperature of 500 °C to 1100 °C.

12. The method of claim 10, wherein the lithium metal oxide includes lithium (Li) and one or more of nickel (Ni), manganese (Mn), cobalt (Co), aluminum (Al), chromium (Cr), vanadium (V), and iron (Fe).

13. The method of claim 10, wherein the first coating material has an average particle diameter of 5 nm to 1000 nm.

14. The method of claim 10, wherein the mixture includes 70 to 90 wt% of the lithium metal oxide and 10 to 30 wt% of the first coating material.

15. A secondary battery comprising:

a cathode;
an anode; and
an electrolyte formed between the cathode and the anode,
wherein the cathode includes the cathode material according to claim 1.

FIG. 1

<u>**100**</u>

10

20

FIG. 2

<u>**200**</u>

20

11

**FIG. 3**

**FIG. 4**

FIG.5

Discharge Power (mW)

Example 1 ———— Comparative Example 1

Comparative Example 2 ———— Comparative Example 3

Europäisches
Patentamt

European
Patent Office

Office européen
des brevets

# EUROPEAN SEARCH REPORT

**Application Number**

EP 24 17 5947

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/260189 A1 (SCHAEFER TIM [DE]) 3 October 2013 (2013-10-03) * paragraphs [0004] to [0010], [0053] to [0059], [0160] to [0162], claims * | 1-15 | INV. C01G53/00 H01M4/04 H01M4/36 H01M4/38 H01M4/587 |
| A | US 2013/244119 A1 (SCHAEFER TIM [DE]) 19 September 2013 (2013-09-19) * the whole document * | 1-15 | |
| A | CN 111 039 333 A (SAMSUNG ELECTRONICS CO LTD) 21 April 2020 (2020-04-21) * the whole document * | 1-15 | |
| A | CN 108 306 005 A (CHENGDU NEW KELI CHEM SCI CO) 20 July 2018 (2018-07-20) * the whole document * | 1-15 | |

**TECHNICAL FIELDS SEARCHED (IPC)**

C01G
H01M

The present search report has been drawn up for all claims

| Place of search | Date of completion of the search | Examiner |
|---|---|---|
| Munich | 28 October 2024 | Nemes, Csaba A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 5947

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2024

| Patent document cited in search report | | Publication date | Patent family member(s) | | Publication date |
|---|---|---|---|---|---|
| US 2013260189 | A1 | 03-10-2013 | DE 102012005426 A1 | | 19-09-2013 |
| | | | US 2013260189 A1 | | 03-10-2013 |
| | | | WO 2013135351 A1 | | 19-09-2013 |
| US 2013244119 | A1 | 19-09-2013 | DE 102012005348 A1 | | 19-09-2013 |
| | | | US 2013244119 A1 | | 19-09-2013 |
| | | | WO 2013135353 A1 | | 19-09-2013 |
| CN 111039333 | A | 21-04-2020 | CN 111039333 A | | 21-04-2020 |
| | | | EP 3659972 A2 | | 03-06-2020 |
| | | | US 2020119346 A1 | | 16-04-2020 |
| CN 108306005 | A | 20-07-2018 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230062573
- KR 1020230113832
- KR 1020230138050
- KR 1020230160195
- KR 101872309 B1

**Non-patent literature cited in the description**

- **SUNG-KYUN JUNG et al.** *Adv. Funct. Mater.,* 2022, vol. 32, 2108790